(19) Europäisches Patentamt / European Patent Office / Office européen des brevets

(11) **EP 1 597 871 B1**

(12) **FASCICULE DE BREVET EUROPEEN**

(45) Date de publication et mention
de la délivrance du brevet:
**03.08.2011 Bulletin 2011/31**

(21) Numéro de dépôt: **04715349.9**

(22) Date de dépôt: **27.02.2004**

(51) Int Cl.:
*H04L 12/46* *(2006.01)*     *H04L 12/56* *(2006.01)*

(86) Numéro de dépôt international:
**PCT/FR2004/000443**

(87) Numéro de publication internationale:
**WO 2004/080001 (16.09.2004 Gazette 2004/38)**

(54) **SYSTEME DE TRANSMISSION DE TRAINS DE DONNEES NUMERIQUES PLESIOCHRONES DANS UN RESEAU ETHERNET VIRTUEL**

ÜBERTRAGUNGSSYSTEM FÜR FOLGEN VON NUMERISCHEN PLESIOCHRONEN DATEN IN EINEM VIRTUELLEN ETHERNET-NETZWERK

SYSTEM FOR THE TRANSMISSION OF PLESIOCHRONOUS DIGITAL DATA STREAMS IN A VIRTUAL ETHERNET NETWORK

(84) Etats contractants désignés:
**AT BE BG CH CY CZ DE DK EE ES FI FR GB GR HU IE IT LI LU MC NL PT RO SE SI SK TR**

(30) Priorité: **28.02.2003 FR 0302481**

(43) Date de publication de la demande:
**23.11.2005 Bulletin 2005/47**

(73) Titulaire: **Quadrillium Sarl**
**75019 Paris (FR)**

(72) Inventeur: **VANDEPUTTE, Jean-Marie**
**F-75011 Paris (FR)**

(74) Mandataire: **Feray, Valérie et al**
**Feray Lenne Conseil**
**Le Centralis**
**63, avenue du Général Leclerc**
**92340 Bourg-la-Reine (FR)**

(56) Documents cités:
**EP-A- 1 246 408     FR-A- 2 818 064**
**US-A- 6 111 876     US-A1- 2002 101 870**
**US-B1- 6 181 699**

• **"VIRTUAL LANS GET REAL ETHERNET SWITCH MAKERS ARE TAKING THE LEAD IN DEPLOYING VIRTUAL LANS ACROSS CAMPUS NETWORKS" 1 mars 1995 (1995-03-01), DATA COMMUNICATIONS, MCGRAW HILL. NEW YORK, US, VOL. 24, NR. 3, PAGE(S) 87-92,94,96, , XP000496027 ISSN: 0363-6399 le document en entier**

**Description**

La présente invention concerne un système de transmission de trains de données numériques plésiochrones sur un réseau de données.

Les liaisons de transmission, par exemple de données de voix, sont coûteuses et demandent une capacité en bande passante supérieure à celle requise par une seule communication ; cette bande passante peut donc être utilisée par plusieurs communications simultanément au moyen de techniques dites de multiplexage qui permettent de partager des ressources entre plusieurs usagers. Une technique de multiplexage connue est celle du multiplexage temporel TDM (Time Division Multiplexing) dans laquelle les signaux de communication occupent tour à tour pendant un intervalle de temps toute la ressource spectrale de la liaison de transmission. Un des multiplexages temporels les plus utilisés par les autocommutateurs téléphoniques est le multiplexage synchrone à N voies de 64 kbit/s. A l'entrée du multiplexeur, on a N sources de 64 kbit/s et délivrant chacune 8 bits toutes les 125 μs (correspondant à un intervalle de temps). Le multiplexeur fournit en sortie un train numérique primaire dont la trame comporte N intervalle de temps et qui a une durée de 125 μs. On a donc en sortie un débit de 2 Mbit/s si N est égal à 32. Chaque train numérique primaire peut à nouveau être multiplexé ; ainsi, un système de 8 Mbit/s résulte du multiplexage de quatre systèmes à 2 Mbit/s. Les liaisons d'accès utilisateur transmettant les trains entrants qui seront ensuite éventuellement remultiplexés sont appelées des affluents. Les affluents ont des horloges d'échantillonnage (ou signaux de synchronisation) voisines mais qui peuvent être légèrement différentes : ils sont dits plésiochrones.

Les réseaux de télécommunications sont amenés à transporter de plus en plus de données, ces données pouvant être aussi bien des datagrammes IP (Internet Protocol) que des données de services classiques telles que des données plésiochrones de débit Nx64kbit/s transportant des services tels que la voix ou la vidéo.

Prenons l'exemple de deux entités A et B telles que deux usines d'une même société. Pour tout ce qui concerne le transfert de données informatiques, les deux entités sont reliées par une ligne spécialisée. Pour les communications téléphoniques, chacune dispose d'une infrastructure construite autour d'un PBX. Lorsqu'une personne de l'entité A téléphone à une personne de l'entité B, l'appel transite par le PBX de l'entité A avant d'être acheminé jusqu'au PBX de l'entité B par le réseau téléphonique traditionnel ou RTC (réseau téléphonique commuté). Un tel échange d'informations présente un coût élevé.

Une solution pour diminuer ce coût consiste à relier les deux PBX par une ligne spécialisée. Ainsi, afin d'uniformiser le transport de l'information (datagrammes ou services classiques), les données plésiochrones transportant des informations telles que la voix, la vidéo sont encapsulées dans des datagrammes IP qui seront ensuite routés au niveau 3, dit niveau réseau, de la hiérarchie de l'architecture OSI (Open System Interconnection) La norme ITU-T H 323 décrit une telle encapsulation de la voix sur IP. Le signal de voix analogique est compressé et codé pour être inséré dans des paquets IP puis entre dans le réseau IP via un routeur, le signal est transmis sur le lien, puis décodé et décompressé à l'autre extrémité. Le signal est ensuite transmis vers un récepteur du type PBX.

Toutefois, la mise en oeuvre d'une telle solution présente certaines difficultés.

Ainsi, les données dans un tel réseau sont routées au niveau 3 ; un tel routage met en oeuvre du logiciel ou du matériel complexe. Cette procédure a ainsi comme inconvénient de ralentir le transfert des services classiques du fait du traitement logiciel ou matériel complexe de niveau 3 à activer.

De plus, pour le transport de la voix sur IP, des mécanismes d'annulation d'écho sont ainsi nécessaires car les délais de transfert sur un réseau IP peuvent dépasser 25 ms.

De surcroît, la mise en place du routage de niveau 3 implique l'utilisation de processeurs puissants consommant de l'énergie, nécessite un refroidissement et présente un coût élevé.

En outre, la source telle que le PBX émettant des trames de données plésiochrones associées à un affluent possède sa propre horloge d'échantillonnage. De même, le récepteur recevant les trames de données plésiochrones possède sa propre horloge qui peut être différente de l'horloge de la source. La moindre différence sur l'horloge pour le transfert de données de voix peut générer des pertes de signal. Il est donc nécessaire de transmettre l'horloge d'échantillonnage associée à l'affluent émis vers le récepteur de façon à synchroniser le récepteur sur l'émetteur.

Dans le cas de trains de données émis sous forme de paquet IP, une solution connue à ce problème consiste à transmettre l'horloge avec le trafic de données sous forme de paquets.

Toutefois, le délai de transfert de données par routage reste soumis à une gigue importante, c'est à dire un temps important entre le paquet le plus rapide et le paquet le plus lent. Cette gigue peut atteindre quelques dizaines de millisecondes. Une telle gigue est inadmissible pour la transmission de l'horloge car la périodicité de transmission de l'horloge n'est alors absolument pas constante et les algorithmes de régénération d'horloge ne peuvent pas fonctionner correctement.

La présente invention vise à fournir un système de transmission d'un train de données numériques plésiochrones plus rapide, plus économique et moins consommateur d'énergie qu'un système utilisant des trains de données numériques plésiochrones encapsulés dans des paquets IP et permettant une transmission de l'horloge associée au train de données plésiochrone avec une gigue réduite.

La présente invention propose à cet effet un système de transmission selon la revendication 1.

Document EP 1 246 408 divulgue une association de trames de paquets d'un réseau local avec un système synchrone numérique de télécommunication.

Document US 6,111,876 divulgue la transmission de trames dans un réseau VLAN.

La source émettant des trains de données numériques plésiochrones est par exemple un affluent de débit Nx64 kbit/s. Le réseau Ethernet virtuel est un réseau virtuel du type Ethernet VLAN (« Virtual Local Area Network » en anglais) répondant à la norme IEEE 802.1 Q. Les trames de données numériques d'un réseau Ethernet VLAN sont commutées à l'intérieur du réseau. Chaque trame a un même identificateur tel qu'un identificateur VID (VLAN IDentifier) associé au réseau local virtuel. Cette commutation se fait d'un bout à l'autre du réseau au niveau 2, dit niveau liaison, de la hiérarchie de l'architecture OSI.

Grâce à l'invention, la commutation des trames permet d'améliorer les performances du système de transmission par rapport à un routage au niveau paquet, en diminuant le nombre de niveaux de l'architecture OSI à traverser. On simplifie le travail des noeuds du réseau qui sont moins consommateurs de processeurs puissants. Un réseau du type Ethernet VLAN permet d'interconnecter plusieurs sources de trains de données numériques plésiochrones telles que des PBX à 2 Mbit/s ou plus généralement des sources de débit Nx64 kbit/s de façon rapide et économique.

De plus, le système selon l'invention permet de transmettre l'horloge de l'affluent associée au train numérique plésiochrone avec une gigue réduite.

En effet, la gigue induite par la transmission de trames commutées est beaucoup plus faible que la gigue induite par la transmission de paquets routés. Cette gigue est de l'ordre de quelques dizaines de microsecondes dans le cas d'un réseau Ethernet de trames commutées.

Le réseau est par exemple un réseau Ethernet VLAN répondant aux normes IEEE 802.1 Q et IEEE 802.1 P.

Le champ de priorité permet d'affecter des priorités aux différentes trames. Huit niveaux de priorité permettent ainsi de réellement privilégier les plus hautes priorités.

Les commutateurs d'un réseau Ethernet VLAN répondant aux normes IEEE 802.1Q et IEEE 802.1 P comportent généralement huit buffers correspondant aux huit niveaux de priorité. Les données de signalisation sont par exemple des données servant à l'établissement et au contrôle des connexions (i.e. les appels) à travers le réseau ou concernant la gestion du réseau et de ses ressources, la taxation et le contrôle de services supplémentaires ou à valeur ajoutée par rapport à la simple connexion.

De manière particulièrement avantageuse, ledit lien de signalisation transporte l'horloge de synchronisation de ladite source émettant des trains de données numériques plésiochrones.

Ainsi, le lien de signalisation permet de synchroniser la terminaison esclave sur la terminaison maître en transmettant l'horloge de la source. Dans la mesure où le lien de signalisation transporte des trames de données ayant un champ de priorité maximal ( niveau sept dans le cas d'un réseau

Ainsi, le lien de signalisation permet de synchroniser la terminaison esclave sur la terminaison maître en transmettant l'horloge de la source. Dans la mesure où le lien de signalisation transporte des trames de données ayant un champ de priorité maximal ( niveau sept dans le cas d'un réseau Ethernet VLAN répondant aux normes IEEE 802.1 Q et IEEE 802.1 P), la gigue induite par la commutation lors du transfert d'horloge est extrêmement réduite. L'horloge est ainsi restituée sur la terminaison esclave avec une périodicité présentant une très faible variation.

Avantageusement, ledit système comporte des moyens pour modifier le niveau de priorité du lien de trafic, ledit niveau de priorité modifié étant transmis par ladite terminaison esclave à ladite terminaison maître via ledit lien de signalisation.

Le lien de signalisation est transmis au niveau de priorité le plus élevé. Le lien de trafic est transmis à l'initialisation au niveau le plus bas (0 par défaut). En cas de problème de transmission sur le lien de trafic (perte d'une trame de trafic identifiée par la perte d'une séquence, perte de synchronisation des trames de trafic identifié par la réception de trames de trafic dans le mauvais ordre), le niveau de priorité du lien de trafic peut être incrémenté selon une table de niveaux de priorité et le nouveau niveau de priorité est transporté sur le lien signalisation, ce niveau de priorité est toujours inférieur ou égal à celui du lien de signalisation.

De manière particulièrement avantageuse, ledit système comporte des moyens pour adapter la longueur desdites trames de trafic en fonction du délai de transmission desdites trames de trafic sur ledit réseau.

Un phénomène d'écho peut en effet se produire pour des délais de transmission de trafic de données supérieurs à 25 ms. Le délai de transfert est lié à la longueur de la trame de trafic et il peut arriver que la trame de trafic ait une longueur trop importante risquant d'induire de l'écho. Pour remédier à ce problème, on estime le délai de transmission d'une trame de trafic entre la terminaison maître et la terminaison esclave et, si ce délai de transmission dépasse une valeur déterminée, on diminue la taille de la trame de trafic de données. Le système selon l'invention permet ainsi de s'affranchir de l'utilisation de processeurs de traitement du signal mettant en oeuvre des algorithmes d'annulation d'écho.

Avantageusement, ladite source émet des trains de données plésiochrones à un débit de Nx64 kbit/s.

D'autres caractéristiques et avantages de la présente invention apparaîtront dans la description suivante d'un mode de réalisation de l'invention donné à titre illustratif et nullement limitatif.

Dans les figures suivantes :

- La figure 1 représente un système de transmission selon l'invention,
- La figure 2 représente le contenu d'une trame de trafic utilisée dans un système selon l'invention
- La figure 3 représente le contenu d'une trame de signalisation utilisée dans un système selon l'invention,
- La figure 4 représente un algorithme de modification d'adaptation du niveau de priorité du lien de trafic implémenté dans un système selon l'invention.

Dans toutes les figures, les éléments communs portent les mêmes numéros de référence.

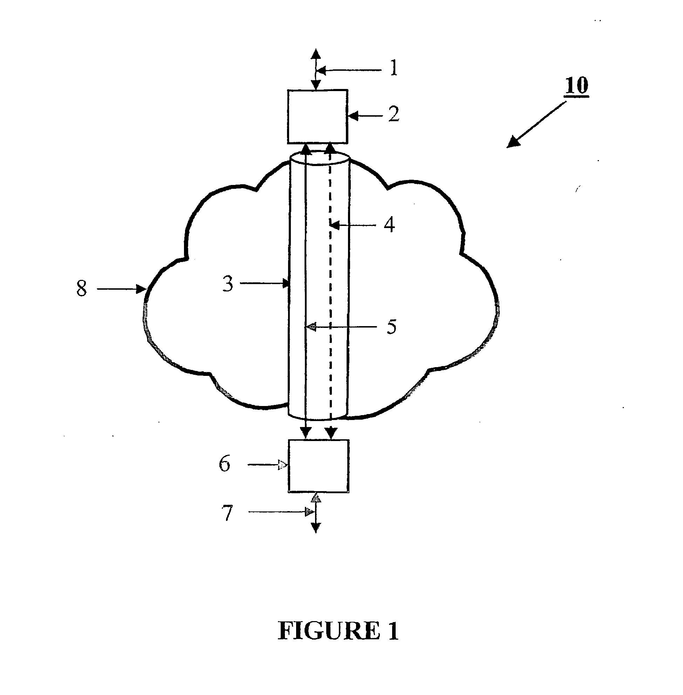

La figure 1 représente un système 10 de transmission selon l'invention.

Le système 10 comporte :

- un réseau 8 virtuel Ethernet VLAN (« Virtual Local Area Network » en anglais),
- deux terminaisons 2 et 6 de réseau Ethernet,
- deux affluents 1 et 7.

Le réseau Ethernet VLAN 8 répond aux normes IEEE 802.1Q et IEEE 802.1P.

Les affluents 1 et 7 fournissent des trains dé données numériques plésiochrones à multiplexage temporel TDM à un débit de Nx64 kbit/s telles que des données d'un lien E1 à 2 Mbit/s (32x64 kbit/s).

Les terminaisons 2 et 6 sont reliés par un tunnel VLAN 3 via les ports de commutateurs VLAN non représentés. On entend par tunnel VLAN un sous-ensemble de ports échangeant des trames ayant le même identificateur de VLAN VID (VLan IDentifier) codé sur 12 bits.

La terminaison 2 de réseau Ethernet, dont l'horloge associée à son affluent 1 à Nx64 kbit/s est synchronisante, est déclarée terminaison maître. L'autre terminaison 6 est déclarée terminaison esclave.

Les trains de données numériques plésiochrones sont acheminés dans le réseau 8 sous forme de trames ayant un format de trame Ethernet.

Les trames Ethernet circulant sur le même VLAN 3 ont un même identificateur de VLAN et un champ de priorité codé sur 3 bits (c'est à dire un niveau de priorité variant de 0 à 7).

Le niveau de priorité permet de distinguer deux trames spécifiques, une trame de trafic et une trame de signalisation transportées dans une trame Ethernet VLAN avec le même identificateur de VLAN mais à des niveaux de priorité différents. La trame de trafic peut être émise à un niveau de priorité VLAN allant de 0 (minimal) à 7. La trame de signalisation est toujours émise au niveau de priorité maximal accessible (niveau 7 par défaut).

La trame de trafic contient des données telles que des données de voix ou de vidéo.

La trame de signalisation contient des données servant à l'établissement et au contrôle des connexions (i.e. les appels) à travers le réseau ou concernant la gestion du réseau et de ses ressources, la taxation et le contrôle de services supplémentaires ou à valeur ajoutée par rapport à la simple connexion.

En conséquence, un même tunnel VLAN 3 permet d'établir deux liens entre les terminaisons 2 et 6 :

- un lien de signalisation 4 transportant les trames de signalisation,
- un lien de trafic 5 transportant les trames de trafic.

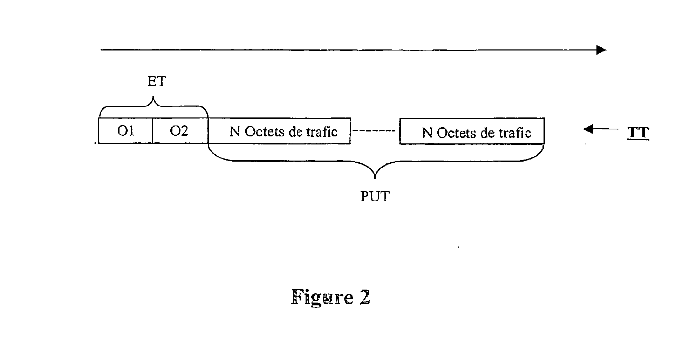

La figure 2 représente le contenu d'une trame de trafic TT utilisée dans un système selon l'invention.

Cette trame TT comprend un en-tête ET comportant deux octets 01 et 02 et une partie utile PUT comportant P groupes de N octets de trafic de données. Le sens de lecture des informations d'octets se fait selon la flèche.

L'en-tête ET transporte des informations de maintenance du lien permettant d'assurer un contrôle dans la bande du lien de trafic. Ainsi, l'octet O1 permet notamment de déterminer le type de trame, en l'occurrence ici une trame de trafic. L'octet 02 comporte un numéro de séquence permettant de numéroter la trame de trafic de 0 à M-1 où M est un nombre entier que nous prendrons par exemple égal à 16.

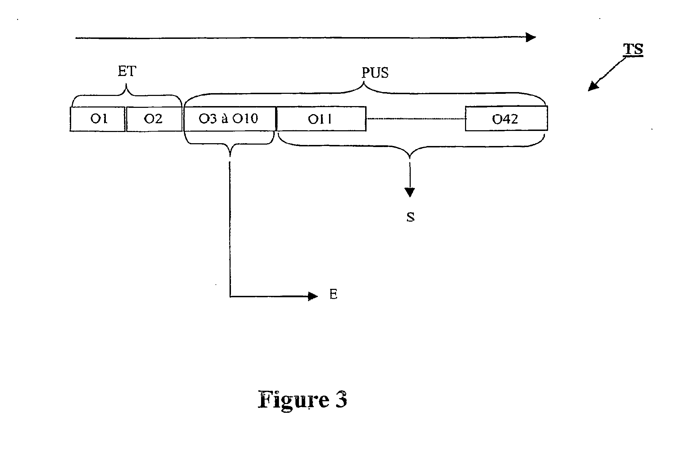

La figure 3 représente le contenu d'une trame de signalisation TS utilisée dans un système selon l'invention. Cette trame TS comprend un en-tête ET comportant deux octets 01 et 02 et une partie utile PUS comportant 40 octets 03 à 042. Le sens de lecture des informations d'octets se fait selon la flèche.

L'en-tête ET a une structure identique à la structure de l'en-tête d'une trame de trafic telle que représentée en figure 2, l'octet 01 comportant un champ spécifiant qu'il s'agit d'une trame de signalisation.

Les 8 octets 03 à O10 de la partie utile sont une estampille temporelle E.

Les 32 octets O11 à 042 contiennent les paramètres de signalisation S.

Une trame de signalisation est émise toutes les M trames de trafic.

Entre les terminaisons de réseau Ethernet, le lien de signalisation permet de synchroniser la terminaison esclave sur la terminaison maître et d'estimer le délai de transmission moyen entre les deux terminaisons. A chaque

**EP 1 597 871 B1**

VLAN sera ainsi associé l'horloge de synchronisation de l'affluent à Nx64 kbit/s.

La terminaison de réseau Ethernet maître synchronise son horloge de référence maître sur l'horloge du flux à Nx64 kbit/s incident. L'horloge de référence maître cadence un compteur fournissant une estampille temporelle. Cette dernière est relevée et transmise à chaque émission de la trame de signalisation de la terminaison de réseau Ethernet maître vers la terminaison de réseau Ethernet esclave. Afin de rétablir une périodicité exacte des estampilles temporelles reçues par la terminaison de réseau Ethernet esclave, le délai de transmission de la trame de signalisation transmise au niveau de priorité 7 (niveau le moins perturbé par le trafic Ethernet) sur le tunnel VLAN est moyenné sur n trames de signalisation consécutives selon la formule suivante :

$$D_{moyen}(n) = D(0) + \frac{1}{n} x \sum_{i=1}^{n}(D(i) - D(0)) x (1-\varepsilon)^i$$

où $\varepsilon$ est un coefficient correcteur inférieur ou égal à 1 et D(i) correspond au délai de transmission de la trame de signalisation i.

L'intervalle de temps (appelé période d'émission) séparant deux émissions de la trame de signalisation transportant l'estampille temporelle maître compensé par le délai moyen de transmission est alors comparé avec la période d'émission de la trame de signalisation venant de la terminaison de réseau Ethernet esclave. La différence entre les deux valeurs commande directement l'horloge de référence de la terminaison de réseau Ethernet esclave et permet d'asservir cette dernière sur l'horloge de référence de la terminaison de réseau Ethernet maître. L'horloge du flux à Nx64 kbit/s sortant de la terminaison de réseau esclave est alors synchronisée avec l'horloge de référence de la terminaison esclave.

Ainsi, l'horloge de l'affluent à Nx64 kbit/s incident est transmise à la terminaison esclave.

Le lien de signalisation permet en outre de qualifier le délai de transmission sur le réseau Ethernet VLAN.

En effet, on peut comparer le délai moyenné de transmission à un délai seuil déterminé à ne pas dépasser. Si ce délai seuil est dépassé, il y a un risque de phénomène d'écho. Ce phénomène d'écho peut en effet se produire pour des délais de transmission de trafic de données supérieurs à 25 ms. Le délai de transfert est lié à la longueur de la trame de trafic et donc au nombre P de groupes de N octets compris dans la trame de trafic.

En cas de risque de dépassement du délai seuil, le système de transmission selon l'invention comporte donc des moyens pour adapter P et donc la longueur des trames de trafic en fonction du délai de transmission des trames de trafic sur ledit réseau. La valeur P peut par exemple prendre deux valeurs 48 ou 32.

Le lien de signalisation est transmis au niveau de priorité le plus élevé. Le lien de trafic est transmis à l'initialisation au niveau le plus bas (0 par défaut). En cas de problème de transmission sur le lien de trafic (perte d'une trame de trafic identifiée par la perte d'une séquence, perte de synchronisation des trames de trafic identifié par la réception de trames de trafic dans le mauvais ordre), le niveau de priorité du lien de trafic peut être incrémenté selon une table de niveaux de priorité et le nouveau niveau de priorité est transporté sur le lien signalisation, ce niveau de priorité est toujours inférieur ou égal à celui du lien de signalisation.

Ainsi, le système selon l'invention peut comporter des moyens pour modifier le niveau de priorité du lien de trafic, le niveau de priorité modifié étant transmis par la terminaison esclave à la terminaison maître via le lien de signalisation.

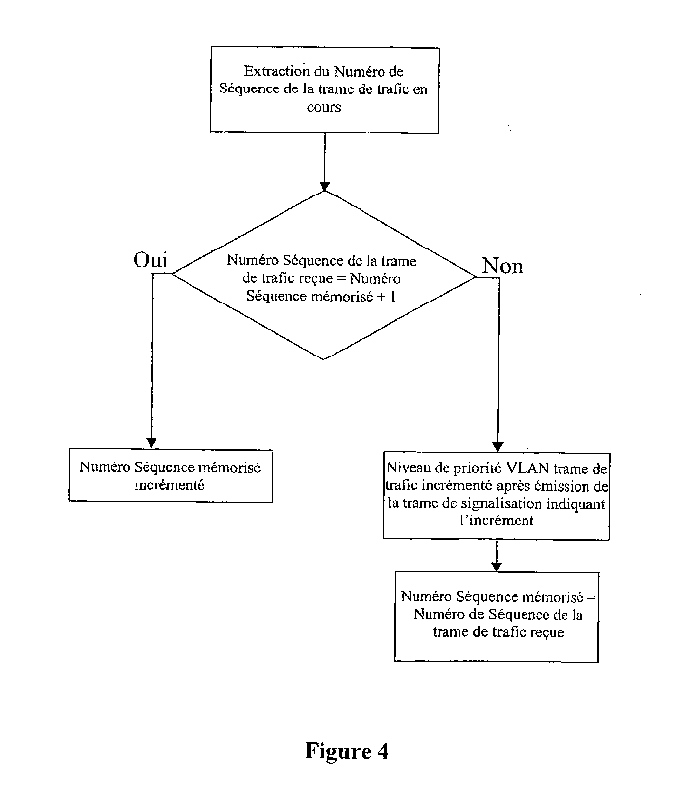

La figure 4 représente un algorithme permettant d'implémenter les moyens pour modifier le niveau de priorité du lien de trafic.

La terminaison esclave extrait le numéro de séquence de la trame de trafic reçue, le numéro de séquence étant un nombre entier compris entre 0 et M-1 et codé dans l'en-tête de la trame. On effectue ensuite une comparaison du numéro de séquence extrait avec le numéro de séquence précédemment mémorisé et incrémenté de 1.

Si les deux valeurs sont égales, il n'y a pas de problème de transmission et le nouveau numéro de séquence mémorisé est incrémenté de 1.

Si les deux valeurs ne sont pas égales, une trame de signalisation est envoyée à la terminaison maître de façon à ce que le niveau de priorité de la trame de trafic soit incrémenté après la réception de la trame de signalisation indiquant l'incrément. Le nouveau numéro de séquence mémorisé est égal au numéro de séquence extrait de la trame de trafic reçue.

Bien entendu, l'invention n'est pas limitée au mode de réalisation qui vient d'être écrit.

Notamment, on peut également introduire des octets d'estampille temporelle dans la partie utile des trames de trafic. Une telle estampille permet de rendre compatible les trames de trafic avec des systèmes de voix sur IP qui n'utiliserait pas de lien de signalisation transportant l'horloge. La partie utile comporte alors par exemple quatre octets d'estampille temporelle suivis des P groupes de N octets de trafic. Par défaut, les deux premiers octets de l'estampille temporelle sont un mot de 16 bits incrémenté à chaque seconde et initialisé le 1 janvier 1900 à 0 heure 0 minutes 0 seconde, les deux octets suivants sont un mot de 16 bits représentant une partie fractionnaire de la seconde. Afin de garantir la taille minimale de la trame de trafic, N multiplié par P est toujours supérieur ou égal à 37.

En outre, le calcul du délai de transmission peut être réalisé selon d'autres algorithmes appropriés.

De plus, l'invention a été décrite pour des données plésiochrones à 2 Mbit/s (32x64 kbit/s) mais l'invention s'applique à tout type de données plésiochrones ayant par exemple un débit à Nx64 kbit/s.

Enfin, on pourra remplacer tout moyen par un moyen équivalent sans sortir du cadre de l'invention.

## Revendications

**1.** Système (10) de transmission comportant :

- une source émettant des trains de données numériques plésiochrones,
- un réseau (8, 3) comportant :

  o une pluralité de commutateurs interconnectés,
  o une terminaison maître (2) reliée à un port d'un desdits commutateurs et recevant lesdits trains de données numériques plésiochrones et émettant lesdites données numériques à l'intérieur dudit réseau,
  o une terminaison esclave (6) reliée à un port d'un desdits commutateurs et recevant lesdites données numériques provenant de ladite terminaison maître (2),

ledit système (10) de transmission étant **caractérisé en ce que** ledit réseau est un réseau Ethernet virtuel (8, 3), lesdites données numériques étant transmises sur ledit réseau virtuel sous forme de trames de données numériques comportant un même identificateur de réseau et un champ de priorité associé à un niveau de priorité, **en ce que** ledit réseau Ethernet (3) virtuel comporte des moyens pour établir un lien (4) dit de signalisation transportant de manière bidirectionnelle des trames de données de signalisation, lesdites trames de données de signalisation ayant un champ de priorité maximal, et un lien (5) de trafic transportant de manière bidirectionnelle des trames de données de trafic, et **en ce que** ledit lien de signalisation (4) transporte l'horloge de synchronisation de ladite source émettant des trains de données numériques plésiochrones.

**2.** Système (10) de transmission selon la revendication 1 **caractérisé en ce que** ledit réseau Ethernet virtuel est un réseau Ethernet VLAN répondant aux normes IEEE 802.1 Q et IEEE 802.1 P.

**3.** Système (10) de transmission selon l'une des revendications précédentes, **caractérisé en ce que** ledit système comporte des moyens pour modifier le niveau de priorité du lien de trafic, la valeur dudit niveau de priorité modifié étant transmise par ladite terminaison esclave (6) à ladite terminaison maître (4) via ledit lien de signalisation (4).

**4.** Système (10) de transmission selon l'une des revendications précédentes, **caractérisé en ce que** ledit système comporte des moyens pour adapter la longueur desdites trames de trafic en fonction du délai de transmission desdites trames de trafic sur ledit réseau.

**5.** Système (10) de transmission selon l'une des revendications précédentes **caractérisé en ce que** ladite source émet des trains de données plésiochrones à un débit de Nx64 kbit/s.

## Claims

**1.** A transmission system (10), including:

- a source transmitting plesiochronous digital data streams,
- a network (8, 3) including:

  o a plurality of interconnected switches,
  o a master termination (2) connected to a port of one of said switches and receiving said plesiochronous digital data streams, and transmitting said digital data inside said network,
  o a slave termination (6) connected to a port of one of said switches and receiving said digital data from said master termination,

said transmission system (10) being **characterized in that** said network is a virtual Ethernet network (8, 3), said digital data being transmitted on said virtual network as digital data frames including a same network identifier and a priority field associated with a priority level, **in that** said virtual Ethernet network (3) includes means for establishing a so-called signaling link (4) bidirectionally conveying traffic data frames, said signaling data frames having a maximum priority field, and a traffic link (5) bidirectionally conveying traffic data frames, and **in that** said signaling link (4) conveys the synchronization clock of said source transmitting plesiochronous digital data streams.

2. The transmission system (10) according to claim 1, **characterized in that** said virtual Ethernet network is a VLAN Ethernet network meeting the IEEE 802.1Q and IEEE 802.1P standards.

3. The transmission system (10) according to one of the preceding claims, **characterized in that** said system includes means for modifying the priority level of the traffic link, the value of said modified priority level being transmitted by said slave termination (6) to said master termination (2) via said signalling link (4).

4. The transmission system (10) according to one of the preceding claims, **characterized in that** said system includes means for adapting the length of said traffic frames according to the transmission delay of said traffic frames over said network.

5. The transmission system (10) according to one of the preceding claims, **characterized in that** said source transmits plesiochronous data streams at a throughput of Nx64 kbits/s.

**Patentansprüche**

1. Übertragungssystem (10), welches

- eine Folgen plesiochroner digitaler Daten aussendende Quelle und
- ein Netz (8, 3) mit

o einer Mehrzahl miteinander in Verbindung stehender Switches,
o einer an einen Port eines der Switches angeschlossene, die Folgen plesiochroner digitaler Daten empfangende und die digitalen Daten in das Innere des Netzes aussendende Master-Abschlusseinrichtung (2), und
o einer an einen Port eines der Switches angeschlossene und die von der Master-Abschlusseinrichtung (2) ausgesendeten digitalen Daten empfangende Slave-Abschlusseinrichtung (6)

umfasst, wobei dieses Übertragungssystem (10) **dadurch gekennzeichnet ist, dass** das Netz ein virtuelles Ethernet (8, 3) ist und die digitalen Daten als Frames digitaler Daten, die gleiche Netzkennzeichnung und ein einer Prioritätsstufe zugeordnetes Prioritätsfeld beinhalten, über dieses virtuelle Netz übertragen werden, und dass das virtuelle Ethernet (3) Mittel zum Aufbau eine Signalisierung genannten Verbindung (4), welche bidirektional Datenframes zur Signalisierung übermittelt, wobei die Datenframes zur Signalisierung ein Feld mit maximaler Priorität aufweisen, und einer Verkehrsdatenverbindung (5), welche bidirektionaler Verkehrsdatenframes übermittelt, umfasst und dass weiterhin die Signalisierungsverbindungen (4) den Synchronisierungstakt der die plesiochronen digitalen Datenfolgen sendenden Quelle transportiert.

2. Übertragungssystem (10) nach Anspruch 1 **gekennzeichnet dadurch, dass** das virtuelle Ethernet ein VLAN-Ethernet nach den Normen IEEE 802.1Q und IEEE 802.1 P ist.

3. Übertragungssystem (10) nach einem der vorhergehenden Ansprüche **gekennzeichnet dadurch, dass** das System Mittel zum Verändern der Prioritätsstufe der Verkehrsdatenverbindung umfasst, wobei der Wert der veränderten Prioritätsstufe durch die Slave-Abschlusseinrichtung (6) über die Signalisierungsverbindung (4) an die Master-Abschlusseinrichtung (2) übertragen wird.

4. Übertragungssystem (10) nach einem der vorhergehenden Ansprüche **gekennzeichnet dadurch, dass** das System Mittel umfasst, um die Länge der Verkehrsdatenframes in Abhängigkeit von der Übertragungsverzögerung der Verkehrsdatenframes in dem Netz anzupassen.

5. Übertragungssystem (10) nach einem der vorhergehenden Ansprüche **gekennzeichnet dadurch, dass** die Quelle plesiochrone Datenfolgen mit einer Geschwindigkeit von Nx64 kbit/s aussendet.

**FIGURE 1**

Figure 2

Figure 3

Extraction du Numéro de
Séquence de la trame de trafic en
cours

Oui

Numéro Séquence de la trame
de trafic reçue = Numéro
Séquence mémorisé + 1

Non

Numéro Séquence mémorisé
incrémenté

Niveau de priorité VLAN trame de
trafic incrémenté après émission de
la trame de signalisation indiquant
l'incrément

Numéro Séquence mémorisé =
Numéro de Séquence de la
trame de trafic reçue

**Figure 4**

**RÉFÉRENCES CITÉES DANS LA DESCRIPTION**

**Documents brevets cités dans la description**

- EP 1246408 A

- US 6111876 A